# DEMANDE DE BREVET EUROPEEN

(11) **EP 1 749 615 A1**
(43) Date de publication de la demande: **07.02.2007**
(21) Numéro de dépôt: 06291246.4
(22) Date de dépôt: 01.08.2006
(51) Int. Cl.: B23K 31/02, B23K 1/00, B25C 5/00, B23B 27/00, B23B 3/30, C04B 37/02

(54) **Procédé de brasage de deux éléments comprenant des évidements sur leurs surfaces brasées en contact**

(30) Priorité: 02.08.2005 FR 0508236
(71) Demandeur: Curtat, Michael, 69330 Meyzieu (FR)
(72) Inventeur: Curtat, Michael, 69330 Meyzieu (FR)
(74) Mandataire: Plaçais, Jean Yves

(57) **Abrégé**

L'invention propose un procédé de brasage, à l'aide d'un métal d'apport, d'un premier élément (10) et d'un deuxième élément présentant chacun au moins une face de contact (12) destinée à être liée par brasage à une face de contact de l'autre élément, dans lequel on amène lesdites faces de contact (22) sensiblement en contiguïté mutuelle avec interposition du métal d'apport et on fait fondre ce dernier. La face de contact (12) du premier élément (10) comporte un réseau de nervures délimitant entre elles des évidements (200). Lors de la fusion du métal d'apport, les sommets des nervures du premier élément (10) viennent sensiblement en contact, de façon continue, avec la face de contact du deuxième élément de sorte que les faces de contact des deux éléments délimitent des cavités, formées par lesdits évidements (200), dans lesquelles est reçu le métal d'apport fondu.

## Description

L'invention concerne les procédés de brasage de deux éléments et les assemblages brasés obtenus par de tels procédés, en particulier les assemblages brasés de type outils de coupe.

Classiquement, les deux éléments présentent chacun une face de contact, formant surface de brasage.

Les procédés classiques de brasage impliquent l'utilisation d'un métal d'apport entre les faces de contact des deux éléments. Au préalable, les éléments sont positionnés précisément l'un par rapport à l'autre, puis immobilisés.

L'ensemble est ensuite brasé pour obtenir la pièce finale, par exemple un outil de coupe.

Les deux éléments sont généralement réalisés à partir de matériaux distincts. Par exemple, lorsque la pièce est un outil de coupe, l'un des éléments est un support métallique et l'autre élément est une plaquette en carbure minéral.

Il en résulte des coefficients de dilatation thermique différents entre les deux éléments. Par conséquent, après refroidissement, les éléments se rétractent de manière non uniforme, ce qui provoque un effet de cisaillement à la jonction des éléments. Cet effet de cisaillement fragilise la couche de brasure et peut entraîner la rupture de la liaison entre les éléments.

L'épaisseur de la couche de brasure est définie par l'écartement entre les éléments, qui est généralement très faible. La couche de brasure est en conséquence très fine, ce qui contribue encore à fragiliser la liaison entre les éléments.

L'invention vient améliorer la situation.

A cet effet, elle propose un procédé de brasage, à l'aide d'un métal d'apport, d'un premier élément et d'un deuxième élément présentant chacun au moins une face de contact destinée à être liée par brasage à une face de contact de l'autre élément, dans lequel on amène lesdites faces de contact sensiblement en contiguïté mutuelle avec interposition du métal d'apport et on fait fondre ce dernier. Il est prévu que la face de contact du premier élément comporte un réseau de nervures délimitant entre elles des évidements, et que, lors de la fusion du métal d'apport, les sommets des nervures du premier élément viennent sensiblement en contact, de façon continue, avec la face de contact du deuxième élément de sorte que les faces de contact des deux éléments délimitent des cavités, formées par les évidements, dans lesquelles est reçu le métal d'apport fondu.

Des caractéristiques optionnelles de la pièce selon l'invention, complémentaires ou de substitution, sont énoncées ci-après :
- Les évidements ont une forme générale rectangulaire.
- Le réseau de nervures forme un quadrillage de la face du premier élément.
- L'un des éléments est en acier et l'autre élément est en carbure minéral.
- Le premier élément est en acier.
- Les sommets des nervures sont linéaires.
- Les sommets des nervures sont arrondis.
- Les sommets des nervures comportent une arête vive.

L'invention propose en outre un assemblage brasé, comportant deux éléments brasés entre eux selon le procédé défini ci-dessus.

L'invention propose en outre un outil de coupe, comportant un tel assemblage brasé, dans lequel le premier élément est un support métallique et le deuxième élément est une plaquette en carbure minéral.

D'autres caractéristiques et avantages de l'invention apparaîtront à l'examen de la description détaillée ci-après et des dessins annexés sur lesquels :
- la figure 1 est une vue en perspective d'un assemblage brasé, conforme à l'invention ;
- la figure 2 est une vue schématique en perspective de la face de contact du premier élément, conformément à l'invention ;
- la figure 3 est une vue schématique de dessus de la face de contact du premier élément, conformément à l'invention.

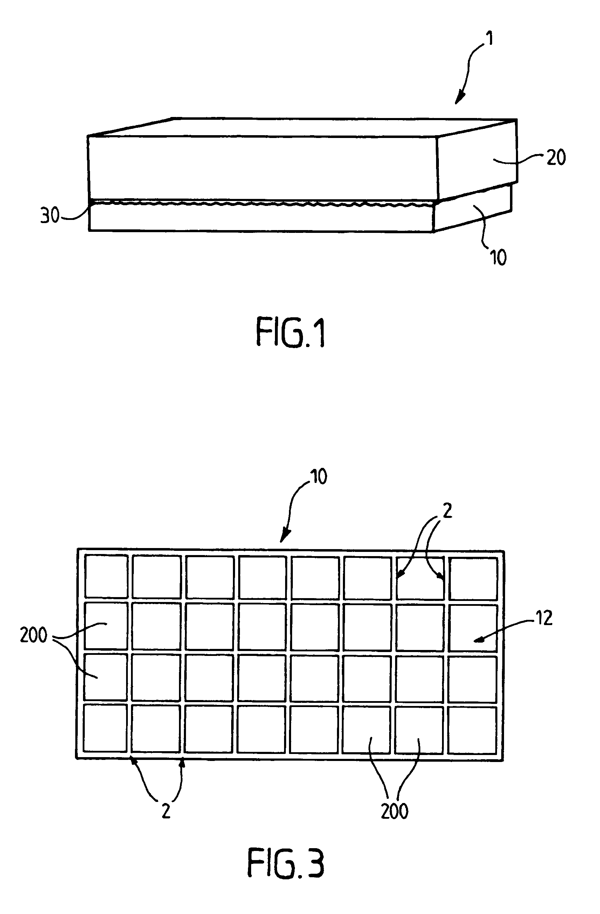

Il est tout d'abord fait référence à la figure 1 qui représente un assemblage brasé 1, conforme à l'invention. L'assemblage 1 est constitué d'un premier élément 10 et d'un deuxième élément 20 brasés entre eux. Chaque élément 10 et 20 présente une face de contact 12 ou 22, formant surface de brasage. Les faces de contact 12 et 22 des deux éléments ont des formes conjuguées et sont placées en regard l'une de l'autre.

La liaison entre le premier élément 10 et le deuxième élément 20 est assurée par la présence d'un joint de brasure 30 résultant du brasage par un métal d'apport.

Au cours du brasage, on amène les faces de contact 12 et 22 des éléments 10 et 20 sensiblement en contiguïté mutuelle avec interposition du métal d'apport. Le métal d'apport est ensuite fondu pour braser l'ensemble.

Le joint 30 est formé par capillarité entre le premier élément 10 et le deuxième élément 20, lorsque le métal d'apport a atteint sa température de fusion.

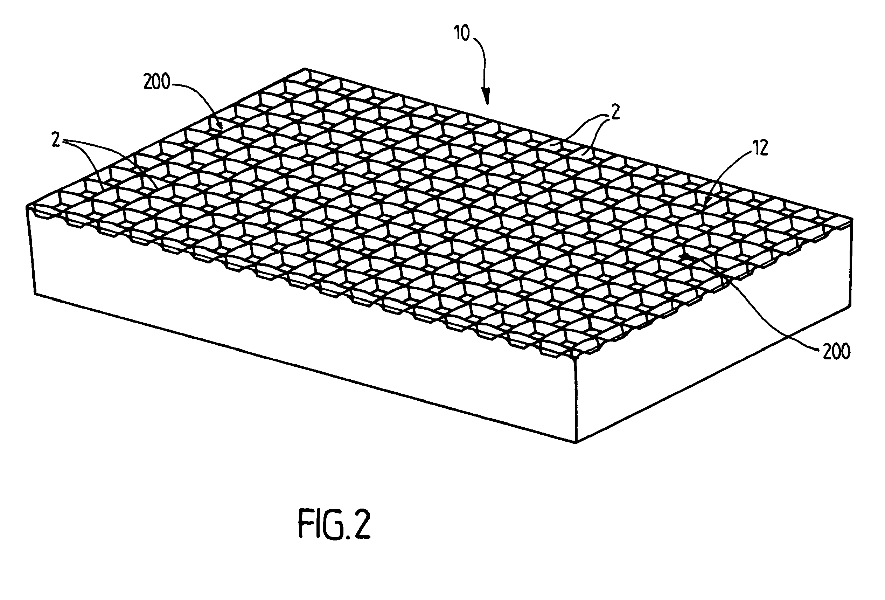

Il est maintenant fait référence aux figures 2 et 3 qui représentent la face de contact 12 du premier élément 10.

Conformément à l'invention, cette face de contact 12 comporte un réseau de nervures 2 délimitant entre elles des évidements 200, tandis que la face de contact 22 du deuxième élément 20 est plane.

La suite de la description sera faite avec référence à un assemblage brasé constitué d'un premier élément 10 présentant une face de contact 12 munie d'un réseau de nervures 2 et d'un deuxième élément 20 présentant une face de contact 12 plane, à titre d'exemple non limitatif.

Les nervures 2 sont saillantes et se recoupent de manière à former des zones à contour fermé et renfoncées qui constituent les évidements 200.

Lors du brasage, les sommets des nervures 2 du premier élément 10 viennent sensiblement en contact, de manière continue, avec la face de contact 22 du deuxième élément 20. Les faces de contact 12 et 22 des éléments 10 et 20 délimitent alors des cavités formées par les évidements 200. Le métal d'apport fondu est reçu dans ces cavités au moment du brasage.

En conséquence, le joint de brasure 30 de l'assemblage 1, vu de profil, décrit une ondulation dont les extrémités supérieures correspondent aux sommets des nervures et les extrémités inférieures au fond des évidements 200, comme montré sur la figure 2.

Le réseau de nervures 2 occupe avantageusement toute la surface de la face de contact 12 du premier élément 10 et lui donne un aspect gaufré.

Lorsque le métal d'apport atteint sa température de fusion lors du brasage, il est reçu dans les cavités formées par les évidements 200. L'épaisseur du joint de brasure 30 est alors plus importante au niveau des cavités, ce qui permet de renforcer la liaison entre le premier élément 10 et le deuxième élément 20. Par ailleurs, la présence de cavités 200 sur la face de contact 12 de l'élément 10 permet d'avoir une surface de brasage plus importante, ce qui assure un brasage de bonne qualité.

Les évidements 200 peuvent avoir une forme sensiblement rectangulaire. Sur la figure 3, les évidements 200 ont en particulier une forme carrée.

Deux ensembles de nervures 2 peuvent être disposés perpendiculairement l'un à l'autre de manière à délimiter de tels évidements rectangulaires 200. En particulier, les nervures 2 de chacun de ces ensembles sont équidistantes.

Sur les figures 2 et 3, le réseau de nervures 2 forme un quadrillage de toute la face de contact 12 du premier élément 10. Ce quadrillage délimite une pluralité d'évidements carrés disposés en rangées parallèles. L'écartement entre les évidements adjacents est défini par la largeur des nervures.

Avantageusement, la profondeur des évidements est comprise entre 0,3 et 0,5 mm, et leurs dimensions en surface sont d'au moins 2 mm. Ainsi, dans le cas illustré où les évidements sont délimités pas des ensembles de nervures parallèles et équidistantes, le pas des nervures parallèles est d'au moins 2 mm.

Toutefois, l'invention n'est pas limitée à des évidements de forme rectangulaire. D'autres formes sont possibles pour les évidements 200, notamment d'autres formes polygonales.

Les sommets des nervures 2 peuvent présenter une certaine largeur de manière à former des zones de contact surfaciques avec la face 22, ou être linéaires pour un contact selon des lignes.

Dans la forme de réalisation où les sommets sont linéaires, ils peuvent avoir une forme arrondie ou à arête vive.

Bien que l'invention s'applique au brasage d'éléments constitués du même matériau, elle est particulièrement avantageuse lorsque les éléments sont constitués de matériaux distincts.

En particulier, le premier élément 10 peut être réalisé en acier, tandis que le deuxième élément 20 est en carbure minéral, notamment en carbure de tungstène.

Le premier élément 10 et le deuxième élément 20 présentent donc des coefficients de dilatation thermique différents, ce qui peut provoquer un effet de cisaillement lors du refroidissement de l'assemblage brasé.

En effet, lors du brasage, le premier élément 10 en acier subit un allongement plus important que le deuxième élément 20 en carbure minéral.

Par exemple, pour un élément 10 en acier, chauffé à 800°C sur une longueur de 60 mm, il a été constaté un allongement de 0,5 mm. En revanche, pour un élément 20 en carbure de tungstène, chauffée à 800°C sur une longueur de 60 mm, il a été constaté un allongement de 0,25 mm seulement.

Pendant le refroidissement de l'assemblage brasé 1, le premier élément 10 et le deuxième élément 20 se contractent donc de manière non uniforme, ce qui provoque l'effet de cisaillement précité.

Les cavités formées selon le procédé de l'invention reçoivent le métal d'apport fondu au moment du brasage, ce qui permet d'avoir une quantité de métal d'apport plus importante au niveau de la liaison 30.

La présence de métal d'apport dans les cavités de l'assemblage brasé de l'invention permet d'augmenter l'épaisseur de la couche de brasure 30 entre les éléments 10 et 20, ce qui confère plus de souplesse à l'assemblage et permet de compenser l'effet de cisaillement.

Le procédé de brasage et l'assemblage brasé de l'invention, permettent donc de réduire efficacement l'effet de cisaillement, tout en garantissant un brasage de bonne qualité.

L'assemblage brasé peut être un outil de coupe, dans lequel l'un des éléments est un support métallique et l'autre élément est une plaquette.

Le support métallique peut être en acier et la plaquette en carbure minéral. Le premier élément 10 de l'invention est alors un support métallique et le deuxième élément 20 est une plaquette.

L'invention n'est pas limitée aux formes de réalisation décrites précédemment et s'étend à d'autres variantes.

En particulier, l'invention n'est pas limitée aux outils de coupe mais englobe tout type d'assemblage obtenu par brasage de deux éléments.

Par ailleurs, l'invention n'est pas limitée aux formes d'évidements 200 décrites ci-dessus à titre d'exemple, ni à un réseau de nervures de type quadrillage.

En outre, les éléments peuvent présenter chacun plus d'une face de contact, et/ou peuvent présenter des faces de contact non planes, par exemple cylindriques.

## Revendications

1. Procédé de brasage, à l'aide d'un métal d'apport (30), d'un premier élément et d'un deuxième élément (10, 20) présentant chacun au moins une face de contact (12, 22) destinée à être liée par brasage à une face de contact de l'autre élément, dans lequel on amène lesdites faces de contact sensiblement en contiguïté mutuelle avec interposition du métal d'apport et on fait fondre ce dernier, **caractérisé en ce que** la face de contact (22) du premier élément comporte un réseau de nervures délimitant entre elles des évidements (200), et **en ce que**, lors de la fusion du métal d'apport, les sommets des nervures du premier élément viennent sensiblement en contact, de façon continue, avec la face de contact du deuxième élément de sorte que les faces de contact des deux éléments délimitent des cavités, formées par lesdits évidements, dans lesquelles est reçu le métal d'apport fondu.

2. Procédé selon la revendication 1, **caractérisé en ce que** les évidements (200) ont une forme générale rectangulaire.

3. Procédé selon l'une des revendications précédentes, **caractérisé en ce que** le réseau de nervures forme un quadrillage de la face (22) du premier élément (10).

4. Procédé selon l'une des revendications précédentes, **caractérisé en ce que** l'un des éléments (10) est en acier et l'autre élément (20) est en carbure minéral.

5. Procédé selon la revendication 4, **caractérisé en ce que** le premier élément (10) est en acier.

6. Procédé selon l'une des revendications précédentes, **caractérisé en ce que** les sommets des nervures sont linéaires.

7. Procédé selon la revendication 6, **caractérisé en ce que** les sommets des nervures sont arrondis.

8. Procédé selon la revendication 6, **caractérisé en ce que** les sommets des nervures comportent une arête vive.

9. Assemblage brasé, **caractérisé en ce qu'**il comporte deux éléments brasés entre eux par le procédé selon l'une des revendications 1 à 8.

10. Outil de coupe, **caractérisé en ce qu'**il comporte un assemblage brasé selon la revendication 9, dans lequel le premier élément est un support métallique et le deuxième élément est une plaquette en carbure minéral.
